# EUROPEAN PATENT SPECIFICATION

(11) **EP 0 985 476 B1**
(45) Date of publication and mention of the grant of the patent: **11.06.2003**
(21) Application number: 99115873.4
(22) Date of filing: 12.08.1999
(51) Int. Cl.: B23B 27/16, B23B 51/00

(54) **Indexable cutting insert for drill bit**
Wendeschneidplatte für Bohrer
Plaquette de coupe indexable pour foret

(30) Priority: 13.08.1998 SE 9802718
(43) Date of publication of application: 15.03.2000
(73) Proprietor: SANDVIK AKTIEBOLAG, 811 81 Sandviken (SE)
(72) Inventor: Svenningsson, Inge, 811 35 Sandviken (SE); Sjölander, Ake, 811 38 Sandviken (SE)

(56) References cited:
- EP-A- 0 508 468
- WO-A-89/08520

## Description

This invention relates to a cutting insert for a twist drill of the type that comprises a shank having one or more helical, chip-transporting grooves, each one of which co-operates with at least one cutting insert having at least one cutting edge located between a front or top surface and a flank surface, which extends at an angle to a reference plane intersecting the centre axis of the drill shank.

### Brief Description of the Appended Drawings

In the drawings:
- Fig 1: is a perspective view of a twist drill having two cutting inserts manufactured according to the principle of the invention,
- Fig 2: is a perspective view of an individual cutting insert manufactured according to the invention,
- Fig 3: is an enlarged planar view, which displays schematically the wavy form of the bottom of a bore hole,
- Fig 4: is a partial section showing the wavy form of the bore hole bottom in an extremely enlarged scale,
- Fig 5: is an enlarged partial section through the cutting insert according to fig 2 in connection with a cutting edge,
- Fig 6 and 7: are analogous sections showing alternative embodiments of the invention, and
- Fig 8: is a schematic section through a cutting insert shown in relation to the geometric centre axis of the drill.

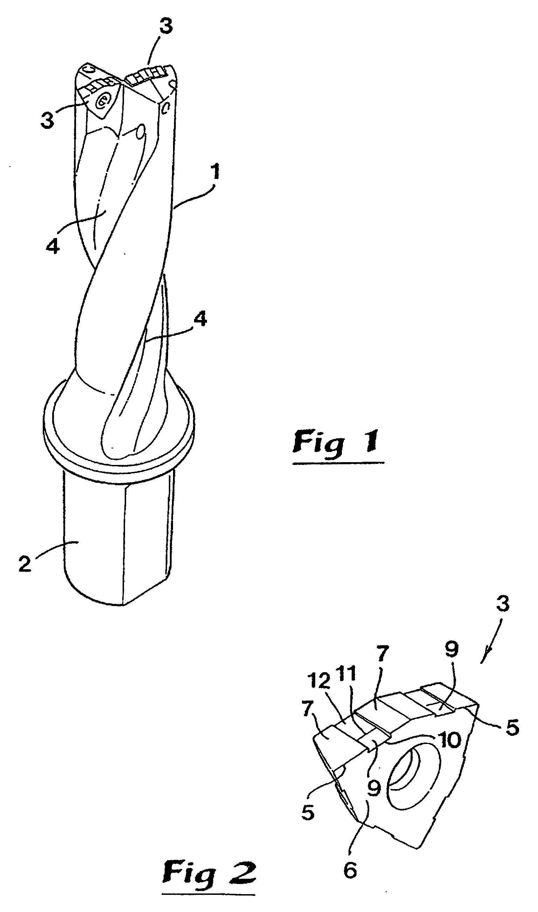

Before the description is continued, it should be pointed out that the twist drill shown in fig 1 includes two cutting inserts, which co-operate with a corresponding number of chip-transporting flutes in the shank. Although these flutes are helicoidal and not strictly helical, the type of tools in question are called twist drills by those skilled in the art. Henceforth, the chip-transporting flutes or grooves will thus be described as helical, although they in a geometric sense are helicoidal.

It should also be pointed out that the number of flutes may deviate from two and that more than one cutting insert may co-operate with each individual flute.

In EP 0 508 468, which represents the most relevant prior art, a drill is disclosed which features a cutting insert which is attached to the tip of a drill shaft. The cutting insert is of a spade type that is to say one insert extends the full diameter of the hole to be drilled and the insert has two main cutting edges one on either side of the longitudinal centre axis if the drill. Each of said major cutting edges is sub-divided into four components; two linear cutting regions separated by a combination of a curved cutting region and a slot shaped nick in the cutting edge. The main cutting edge is formed in this manner in order to ensure that the chips produced during the cutting process are narrower thus facilitating chip transport.

Also in WO-A-8908520 a solid twist drill is disclosed in which the flank surfaces of the tip of the drill are divided by a groove. The main cutting edge of this drill is divided into the following regions starting from the inner centre peak of the drill; a point cutting edge, an inner cutting edge, an arc cutting edge, formed by the intersection of the groove and the flute and lastly an outer cutting edge.

### Background of the Invention

Generally, twist drills tend to oscillate in the direction of torsion during machining. When the drill tool is in operation, the shank oscillates to and fro in the direction of torsion, whereby the same alternately is extended and shortened. This cycle creates a regenerative effect in the form of a feed-back vibration mechanism, which briefly may be described in the following way.

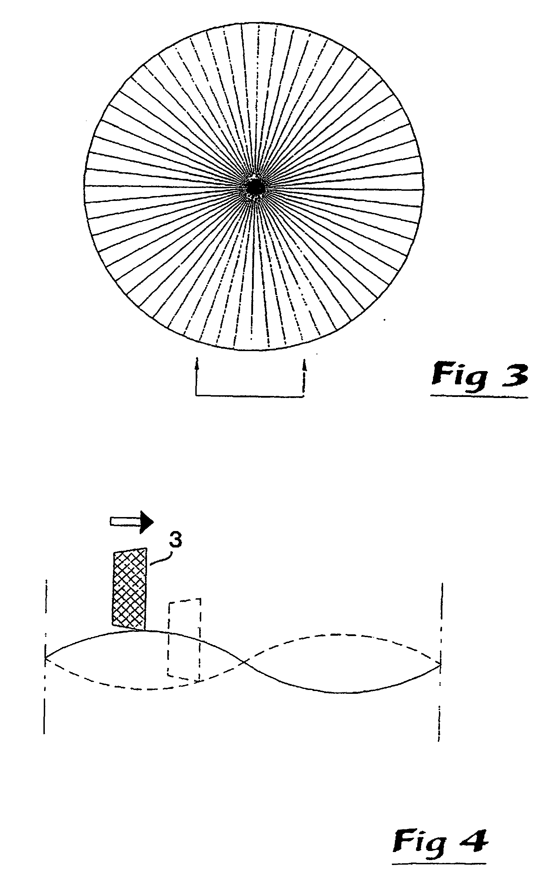

When a drill shank oscillates in the above indicated way, the individual cutting edge cuts a wavy surface in the bottom of the bore hole, as is generally illustrated in figs 3 and 4. Thereafter, when either one and the same cutting edge or a subsequent cutting edge (depending on whether the tool includes one or more cutting edges which cut in the same path) runs across this wave surface, a secondary wave surface is created (compare the continuous and dashed wave lines, respectively, in fig 4). In practice, this means that the nominal chip thickness will vary depending on the phase position or phase displacement between the waved surfaces in the bottom of the bore hole. When the nominal chip thickness varies, the cutting force will also vary. This constitutes the driving force behind the above-mentioned vibration mechanism. If the chip width is increased (due to the fact that the diameter of the drill is increased at the same time as the other properties of the drill remain intact) beyond a certain value, the mechanical system is no longer capable of resisting, and therefore the oscillating amplitude will grow and become unstable. With "the mechanical system" is here understood primarily the helically cut drill as such. This mechanical system is primarily effected by the length of the drill shank. More precisely, a longer drill becomes more unstable torsion-directionally than a shorter one.

If the regenerative effect is triggered off, i.e. the amplitude of the vibrations grows, after a short while the vibration level will be very high. However, the growth of the amplitude decreases after a time as a consequence of other mechanisms, for instance the fact that the cutting edge cannot cut itself free.

### Objects and Features of the Invention

The present invention aims at solving the above mentioned problems and at providing an improved cutting insert for a twist drill. Thus, a primary object is to provide a cutting insert for a twist drill which directly at the beginning of use counteracts the development of an unstable regenerative effect, i.e. increasing oscillating amplitude in the drill shank when the drill works.

According to the invention, the above-mentioned object is attained by the features defined in claim 1. Preferred embodiments of the invention are furthermore defined in the dependent claims.

### Detailed Description of Preferred Embodiments of the Invention

The drill tool shown in fig 1 includes a shank designated 1, which at a rear end transforms into an attachment part 2 having a shape which is suitable for attachment of the tool in a conventional holder. The shank has two cutting inserts 3 at the front end or tip thereof. In the example shown, these cutting inserts are of a detachable type. More precisely, they may be fastened by means of screws in seats in the area of the tip of the shank. In the example, a number of flutes 4 corresponding to the number of cutting inserts extend backwards from the tip of the shank. These flutes are helical and have the purpose of evacuating chips, which are cut loose by the cutting inserts 3, out of the drill hole.

In fig 2 the individual cutting insert 3 is illustrated in an enlarged scale. In this embodiment example, the cutting insert has a hexagonal basic shape and three pairs of cooperating main cutting edges 5, 5 that are active in pairs during operation. In other words, the cutting insert 3 may be readjusted between three different positions in the appurtenant seat.

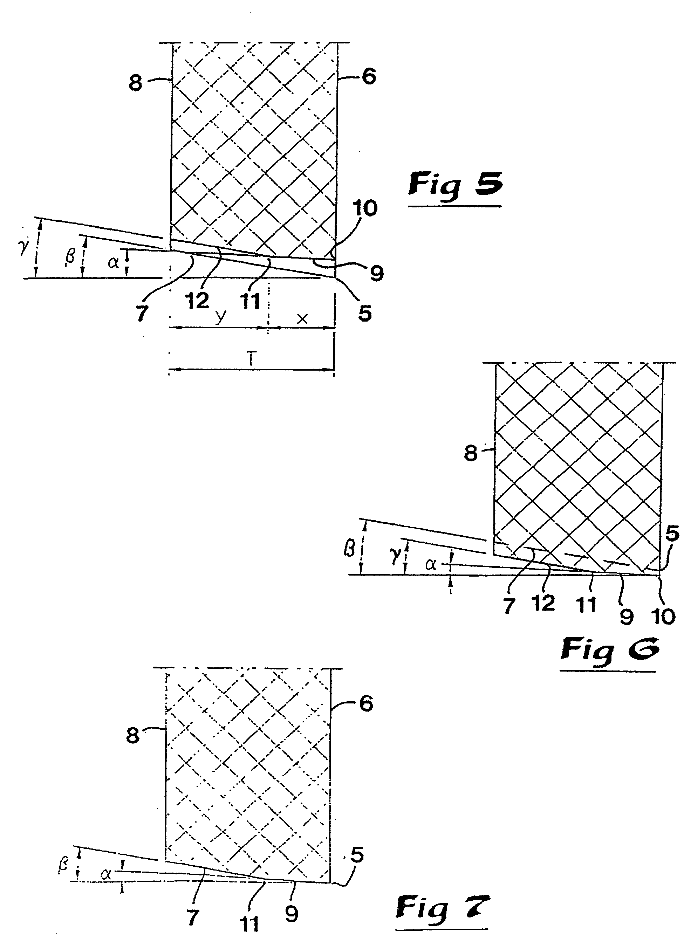

Each separate main cutting edge 5 is provided or located between, on one hand, a front or top surface 6 on the cutting insert and, on the other hand, a flank surface 7 extending at an acute angle to the front surface 6 (or - if the front surface has a complex, uneven shape - an arbitrary neutral plane which is generally parallel to the front surface). According to existing standard, the angle of the flank surface 7 in relation to the front surface 6 is within the range of 78-84°, i.e. the complementary angle β thereof (see fig 5-7) is within the range of 6-12°.

An underside opposite the front surface 6 on the cutting insert is designated 8 in fig 5-7.

As far as the shown drill tool and the cutting insert thereof have been described hitherto, the same are in all essentials previously known.

New and characteristic for the present invention is that a second flank surface 9 is provided in connection with at least a part of the individual main cutting edge 5 of the cutting insert 3, the angle of which surface in relation to the front surface 6 (or a neutral plane through the cutting insert substantially parallel therewith) is larger than the angle of the first flank surface 7 in relation to the same. Advantageously, the angle of the second flank surface 9 in relation to the front surface is within the range of 87-89°, i.e. the complementary angle α according to fig 5-7 is within the range of 1-3°.

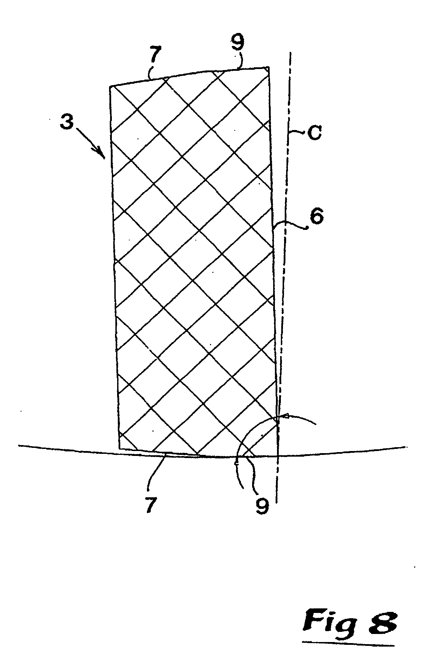

In the embodiment according to fig 2 and 5 as well as in the alternative embodiment according to fig 6, the second flank surface 9 extends only along a certain part of the length of the individual main cutting edge 5. In doing so, the flank surface 9 connects to a secondary, shorter cutting edge or edge formation 10, which, in the embodiments according to fig 5 and 6, is displaced depthwise in relation to the main cutting edge 5, which only connects to the first flank surface 7. More precisely, the flank surface 9 together with appurtenant secondary edge 10 are displaced a distance into the bit body, the surface 9 transforming, via a breaking line 11, into a surface 12 which may be parallel to the flank surface 7, i.e. the angles β and γ are equally large. In practice, the length "x" of the surface 9 should be less than the length "y" of the surface 12. It should also be pointed out that the countersink, which is delimited by the flank surfaces 9 and 12, should have a width which is considerably less than the total width of the main flank surface 7. In other words, the length of the secondary edge 10 should be considerably less than the length of the individual main cutting edge 5.

In the embodiment according to fig 6, the surfaces 9 and 12 are provided on a projection, which protrudes somewhat in relation to the flank surface 7. In other respects, the same dimension and angle conditions as referred to above in respect of the embodiment according to fig 5 pertain also here.

In fig 7, a third embodiment is shown according to which the second, steeper flank surface 9 extends along the entire length of the cutting edge 5. Thus, in this embodiment, the second flank surface 9 transforms directly in the flank surface 7 via the breaking line 11. In other words, in doing so, countersinks and projections, respectively, of the type shown in fig 5 and 6, are missing.

In fig 8 is illustrated how the individual cutting insert 3 of the drill may also be placed in an oblique position in relation to the reference plane which is represented by the geometric centre axis "c" (the axis of rotation) of the drill. The essential thing according to the invention is that the second flank surface 9 extends at another angle in relation to said reference plane than the first flank surface 7.

### The Function and Advantages of the Invention

By forming the cutting insert in the above mentioned way with not only one single plane flank surface extending at, for instance, 78-84° angle to the individual cutting edge, but also with a second flank surface extending at a steeper angle to the front surface of the cutting insert, it has turned out that the drill cannot oscillate with a higher amplitude than the one the drill gets by cutting itself free; provided that the flank surface does not plasticize the material of the work piece. Such a plasticizing of the material dampens the oscillations by virtue of the work involved in the plasticizing process. Either the amplitude of the oscillations is limited or the oscillation frequency decreases below the frequency, which is natural for the tool, i.e. the neutral or inherent frequency of the tool. The amplitude with which the tool oscillates when the same cannot oscillate in the neutral frequency thereof but at a lower frequency will of necessity become lower by the fact that the oscillations in these frequencies are dampened faster. In order for the above-mentioned regenerative effect to be triggered off, i.e. the oscillating amplitude to grow, at a certain frequency, it is required that the transfer function of the system at this frequency, represented in the plane complex of numbers, should have a negative real part. At lower frequencies, the real part becomes positive.

If the drill tool cannot oscillate with higher frequencies, neither the regenerative effect can become unstable, i.e. triggered off (see Veck M Teipel K "Dynamisches Verhalten spanander Werkzeugmaschinen", Springer-Verlag 1977, ISBN 3-540-08468-1).

A substantial advantage of the present invention is that the same enables use of twist drills larger in length and/or diameter than previously known drills with the corresponding performance. Thus, the manufacturer may choose between either extending the shank of the drill or making the cutting inserts with longer cutting edges (i.e. larger diameter) or more efficient cutting edges without the regenerative effect becoming unstable. Of course, an extension of the drill shank may also be combined with an increase of the diameter.

## Claims

1. A polygonal, indexable cutting insert (3) for chip forming drilling comprising a front or top surface (6) and an underside (8) which are mainly parallel and a first flank surface (7) which extends at an acute angle (β) whilst intersecting the top surface (6) and extending to the underside surface (8), said cutting insert having at least two main cutting edges (5) each located at the junction between the top surface (6) and the flank surface (7), said cutting edges (5) are broken in the middle so that each cutting edge forms an internal obtuse angle at the break, the insert has a central securing hole,
**characterized in that** a secondary cutting edge (10) is formed between the front surface (6) and a second flank surface (9) adjacent to the first flank surface (7), said secondary cutting edge (10) being substantially parallel to the cutting edge (5) but displaced from it in the plane of the front or top surface (6) and said second flank surface extending at another angle in relation to the front surface (6) than the first flank surface (7) and that the second flank surface (9) transforms via a breakline (11) into a third flank surface (12) and that said second and third flank surfaces are at different angles to the front surface (6).

2. Indexable cutting insert (3) according to claim 1, **characterized in that** the total surface formed by the second (9) and third (12) flank surfaces extends from the top surface (6) to the underside surface (8).

3. Indexable cutting insert (3) according to claim 1, **characterized in that** the cutting insert (3) has the shape of a regular polygon.

4. Indexable cutting insert (3) according to claim 1, **characterized in that** the angle (α) of the second flank surface (9) in relation to the topsurface (6) is larger than the angle (β) of the first flank surface (7) in relation to the same.

5. Indexable cutting insert (3) according to claim 1, **characterized in that** a countersink is formed by the second and third flank surfaces (9) and (12) in relation to the first flank surface (7).

6. Indexable cutting insert (3) according to claim 1, **characterized in that** a raised ridge is formed by the second and third flank surfaces (9) and (12) in relation to the first flank surface (7).

7. Indexable cutting insert (3) according to claim 1, **characterized in that** the countersink delimited by flank surfaces (9) and (12) has a width (W) which is considerably less than the total width of the main flank surface (7).

8. Indexable cutting insert (3) according to claim 1, **characterized in that** the first flank surface (7) extends at an acute angle to the front surface (6).

9. Indexable cutting insert (3) according to claim 1, **characterized in that** the insert body has a hexagonal basic shape, having three pairs of cooperating main cutting edges (5) along each side which include an obtuse vertex in a middle portion thereof to stabilize said insert during drilling.

## Patentansprüche

1. Polygonaler Wendeschneideinsatz (3) zum spanbildenden Bohren mit einer vorderen oder oberen Fläche (6) und einer Unterseite (8), die hauptsächlich parallel verlaufen, und einer ersten Freifläche (7), die sich unter einem spitzen Winkel (β) erstreckt, während sie die obere Fläche (6) schneidet und sich zu der Unterseitenfläche (8) erstreckt, wobei der Schneideinsatz mindestens zwei Hauptschneidkanten (5) hat, deren jede an der Verbindung zwischen der oberen Fläche (6) und der Freifläche (7) angeordnet ist, die Schneidkanten (5) in der Mitte unterbrochen sind, so daß jede Schneidkante an der Unterbrechung einen inneren stumpfen Winkel bildet, und wobei der Einsatz ein mittiges Befestigungsloch hat,
**dadurch gekennzeichnet, daß** eine zweite Schneidkante (10) zwischen der vorderen Fläche (6) und einer zweiten Freifläche (9) neben der ersten Freifläche (7) gebildet ist, wobei die zweite Schneidkante (10) im wesentlichen parallel zu der Schneidkante (5) ist, aber von dieser in der Ebene der vorderen oder oberen Fläche (6) versetzt ist, und die zweite Freifläche sich unter einem anderen Winkel bezüglich der vorderen Fläche (6) erstreckt als die erste Freifläche (7) und daß die zweite Freifläche (9) über eine Unterbrechungslinie (11) in eine dritte Freifläche (12) übergeht und daß die zweite und dritte Freifläche unter unterschiedlichen Winkeln zur vorderen Fläche (6)liegen.

2. Wendeschneideinsatz (3) nach Anspruch 1, **dadurch gekennzeichnet, daß** die Gesamtfläche, welche durch die zweite (9) und dritte (12) Freifläche gebildet ist, sich von der oberen Fläche (6) zu der Unterseitenfläche (8) erstreckt.

3. Wendeschneideinsatz (3) nach Anspruch 1, **dadurch gekennzeichnet, daß** der Schneideinsatz (3) die Form eines regelmäßigen Polygons hat.

4. Wendeschneideinsatz (3) nach Anspruch 1, **dadurch gekennzeichnet, daß** der Winkel (α) der zweiten Freifläche (9) bezüglich der oberen Fläche (6) größer ist als der Winkel (β) der ersten Freifläche (7) bezüglich derselben.

5. Wendeschneideinsatz (3) nach Anspruch 1, **dadurch gekennzeichnet, daß** ein Senker durch die zweite und dritte Freifläche (9) und (12) bezüglich der ersten Freifläche (7) gebildet ist.

6. Wendeschneideinsatz (3) nach Anspruch 1, **dadurch gekennzeichnet, daß** eine erhabene Rippe durch die zweite und dritte Freifläche (9) und (12) bezüglich der ersten Freifläche (7) gebildet ist.

7. Wendeschneideinsatz (3) nach Anspruch 1, **dadurch gekennzeichnet, daß** der Senker, welcher durch die Freiflächen (9) und (12) begrenzt ist, eine Breite (W) hat, die merklich kleiner ist als die Gesamtbreite der Hauptfreifläche (7).

8. Wendeschneideinsatz (3) nach Anspruch 1, **dadurch gekennzeichnet, daß** die erste Freifläche (7) sich unter einem spitzen Winkel zu der vorderen Fläche (6) erstreckt.

9. Wendeschneideinsatz (3) nach Anspruch 1, **dadurch gekennzeichnet, daß** der Einsatzkörper eine hexagonale Grundgestalt hat mit drei Paaren von zusammenwirkenden Hauptschneidkanten (5) längs jeder Seite, welche einen stumpfen Scheitel in ihrem Mittelabschnitt einschließen, um während des Bohrens den Einsatz zu stabilisieren.

## Revendications

1. Plaquette de coupe amovible polygonale (3) destinée à un perçage formant des copeaux comprenant une surface avant ou supérieure (6) et un dessous (8) qui sont principalement parallèles et une première surface de dépouille (7) qui s'étend sous un angle aigu (β) tout en recoupant la surface supérieure (6) et s'étendant vers la surface de dessous (8), ladite plaquette de coupe comportant au moins deux arêtes tranchantes principales (5) situées chacune à la jonction entre la surface supérieure (6) et la surface de dépouille (7), lesdites arêtes tranchantes (5) sont brisées au milieu de sorte que chaque arête tranchante forme un angle interne obtus au niveau de la brisure, la plaquette comporte un trou de fixation central,
**caractérisée en ce qu'**une arête tranchante secondaire (10) est formée entre la surface avant (6) et une seconde surface de dépouille (9) contiguë à la première surface de dépouille (7), ladite arête tranchante secondaire (10) étant sensiblement parallèle à l'arête tranchante (5) mais décalée par rapport à celle-ci dans la plan de la surface avant ou supérieure (6) et ladite seconde surface de dépouille s'étendant sous un autre angle que la première surface de dépouille (7) par rapport à la surface avant (6), et **en ce que** la seconde surface de dépouille (9) se transforme par l'intermédiaire d'une ligne de rupture (11) en une troisième surface de dépouille (12), et **en ce que** lesdites seconde et troisième surfaces de dépouille sont sous des angles différents par rapport à la surface avant (6).

2. Plaquette de coupe amovible (3) selon la revendication 1,
**caractérisée en ce que** la surface totale formée par les seconde (9) et troisième (12) surfaces de dépouille s'étend depuis la surface supérieure (6) jusqu'à la surface de dessous (8).

3. Plaquette de coupe amovible (3) selon la revendication 1,
**caractérisée en ce que** la plaquette de coupe (3) présente la forme d'un polygone régulier.

4. Plaquette de coupe amovible (3) selon la revendication 1,
**caractérisée en ce que** l'angle (α) de la seconde surface de dépouille (9) par rapport à la surface supérieure (6) est supérieur à l'angle (β) de la première surface de dépouille (7) par rapport à celle-ci.

5. Plaquette de coupe amovible (3) selon la revendication 1,
**caractérisée en ce qu'**un évidement est formé par les seconde et troisième surfaces de dépouille (9) et (12) par rapport à la première surface de dépouille (7).

6. Plaquette de coupe amovible (3) selon la revendication 1,
**caractérisée en ce qu'**une nervure surélevée est formée par les seconde et troisième surfaces de dépouille (9) et (12) par rapport à la première surface de dépouille (7).

7. Plaquette de coupe amovible (3) selon la revendication 1,
**caractérisée en ce que** l'évidement délimité par les surfaces de dépouille (9) et (12) présente une largeur (W) qui est considérablement inférieure à la largeur totale de la surface de dépouille principale (7).

8. Plaquette de coupe amovible (3) selon la revendication 1,
**caractérisée en ce que** la première surface de dépouille (7) s'étend sous un angle aigu par rapport à la surface avant (6).

9. Plaquette de coupe amovible (3) selon la revendication 1,
**caractérisée en ce que** le corps de la plaquette présente une forme de base hexagonale, comportant trois paires d'arêtes tranchantes principales coopérantes (5) le long de chaque côté, lesquelles comprennent un sommet obtus dans une partie de milieu de celles-ci pour stabiliser ladite plaquette durant le perçage.
